# EUROPÄISCHE PATENTSCHRIFT

(11) **EP 3 877 674 B1**
(45) Veröffentlichungstag und Bekanntmachung des Hinweises auf die Patenterteilung: **01.11.2023**
(21) Anmeldenummer: 19783517.6
(22) Anmeldetag: 07.10.2019
(51) Int. Cl.: F16H 57/04, F16H 57/08, F16D 1/10

(54) **VERZWEIGTE SCHMIERSTOFFLEITUNG**
BRANCHED LUBRICANT LINE
CONDUITE DE LUBRIFIANT RAMIFIÉE

(30) Priorität: 09.11.2018 DE 102018219140
(43) Veröffentlichungstag der Anmeldung: 15.09.2021
(73) Patentinhaber: ZF Friedrichshafen AG, 88046 Friedrichshafen (DE); ZF Wind Power Antwerpen NV, 3920 Lommel (BE)
(72) Erfinder: DE LAET, Wim, 2000 Antwerpen (BE); UYTTERHOEVEN, Pieter, 88046 Friedrichshafen (DE); GERNAEY, Maarten, 88046 Friedrichshafen (DE)
(74) Vertreter: ZF Friedrichshafen AG
(86) Internationale Anmeldenummer: PCT/EP2019/077007
(87) Internationale Veröffentlichungsnummer: WO 2020/094305

(56) Entgegenhaltungen:
- EP-A2- 2 280 193
- DE-A1-102009 031 320
- DE-A1-102015 217 906
- DE-A1-102016 202 533
- DE-U1- 8 535 076

## Beschreibung

Die Erfindung betrifft ein Getriebe nach dem Oberbegriff von Anspruch 1.

Aus der Druckschrift EP 3 008 355 B1 ist ein Getriebe mit Ölführungskanälen zur Druckschmierung einer Zahnkupplung mit einer Axialkontaktfläche bekannt.

Aus der Druckschrift DE 10 2015 217906 A1 ist ein weiteres Getriebe bekannt.

Der Erfindung liegt die Aufgabe zugrunde, die Schmierstoffversorgung eines Getriebes zu verbessern.

Diese Aufgabe wird gelöst durch ein Getriebe nach Anspruch 1. Bevorzugte Weiterbildungen sind in den Unteransprüchen enthalten.

Das Getriebe weist eine Planetenstufe auf. Ein Planetenträger der Planetenstufe bildet eine erste Verzahnung und mindestens eine Schmierstoffleitung aus.

Die erste Verzahnung bildet mit einer zweiten Verzahnung eine Passverzahnung. Die zweite Verzahnung wird von einer weiteren Komponente des Getriebes gebildet. Bei der zweiten Komponente kann es sich etwa um eine Sonnenwelle einer weiteren Planetenstufe handeln.

Die Verzahnungen einer Passverzahnung sind koaxial ausgerichtet und greifen ineinander ein. Dadurch kommt eine drehfeste Verbindung zwischen den Verzahnungen zustande. Vorliegend besteht also eine drehfeste Verbindung zwischen der ersten Verzahnung und der zweiten Verzahnung und damit zwischen dem Planetenträger und der weiteren Komponente.

Die Schmierstoffleitung weist neben der ersten Austrittsmündung eine Eintrittsmündung und erfindungsgemäß eine zweite Austrittsmündung auf. Die Mündungen sind schmierstoffleitend miteinander verbunden. Die Eintrittsmündung ist so in einen Schmierstoffkreislauf des Getriebes integriert, dass Schmierstoff durch die Eintrittsmündung in die Schmierstoffleitung eingeleitet wird.

Die Schmierstoffleitung verzweigt sich. So wird ein erster Teil des in die Schmierstoffleitung eingeleiteten Schmierstoffs wird zu der ersten Austrittsöffnung geleitet und tritt dort aus der Schmierstoffleitung aus. Ein zweiter Teil des in die Schmierstoffleitung eingeleiteten Schmierstoffs wird zu der zweiten Austrittsmündung geleitet und tritt dort aus der Schmierstoffleitung aus.

Die erste Austrittsmündung ist zur Schmierung der Passverzahnung ausgebildet. Sie ist so angeordnet, dass der austretende Schmierstoff in einen Zwischenraum zwischen der ersten Verzahnung und der zweiten Verzahnung gelangt.

Die Erfindung zeichnet sich dadurch aus, dass die zweite Austrittsmündung zur Schmierung eines Sonnenrads bzw. einer Verzahnung des Sonnenrads der Planetenstufe ausgebildet ist. Die zweite Austrittsmündung ist also so ausgerichtet, dass Schmierstoff, der aus der zweiten Austrittsmündung austritt, mindestens teilweise auf die Verzahnung des Sonnenrads gelangt.

Erfindungsgemäß wird mit einer einzigen, durch den Planetenträger ausgebildeten Schmierstoffleitung sowohl die Passverzahnung als auch die Verzahnung des Sonnenrads geschmiert. Dies vereinfacht den Aufbau des Schmierstoffkreislaufs.

Die zweite Austrittsmündung ist in einer bevorzugten Weiterbildung als Spritzdüse ausgestaltet. Indem der aus der zweiten Austrittsmündung austretende Schmierstoff auf die Verzahnung des Sonnenrads gespritzt wird, lässt sich ein Spalt zwischen der zweiten Austrittsmündung und dem Sonnenrad überbrücken.

Auch die erste Austrittsmündung kann als Spritzdüse ausgestaltet sein. In dem Fall würde der Schmierstoff von der ersten Austrittsmündung so auf die Passverzahnung gespritzt werden, dass mindestens ein Teil des Schmierstoffs in den Zwischenraum zwischen der ersten Verzahnung und der zweiten Verzahnung gelangt.

Bevorzugt ist die erste Austrittsmündung aber weitergebildet, die Passverzahnung per Druckschmierung mit Schmierstoff zu versorgen. Dies bedeutet, dass zwischen der ersten Austrittsmündung und der Passverzahnung bzw. zwischen der ersten Austrittsmündung und dem Zwischenraum zwischen der ersten Verzahnung und der zweiten Verzahnung eine schmierstoff- und druckleitende Verbindung besteht. Eine derartige Verbindung lässt sich realisieren durch eine unmittelbar aneinander angrenzende Anordnung der ersten Austrittsmündung und der Passverzahnung.

Erfindungsgemäß umfasst die Schmierstoffleitung eine erste Bohrung und eine zweite Bohrung. Die erste Bohrung bildet die erste Austrittsmündung aus und mündet in die zweite Bohrung bzw. in eine Seitenfläche der zweiten Bohrung. Eine erste Mündung der ersten Bohrung ist demnach mit der ersten Austrittsmündung identisch. Eine zweite Mündung der ersten Bohrung befindet sich in der Seitenfläche der zweiten Bohrung. Die zweite Bohrung bildet die Eintrittsmündung und die zweite Austrittsmündung der Schmierstoffleitung aus. Durch die zwei ineinander mündenden Bohrungen vereinfacht sich die Fertigung der Schmierstoffleitung.

Bevorzugt sind die erste Bohrung und die zweite Bohrung mit unterschiedlichen Durchmessern weitergebildet. Durch die unterschiedlichen Durchmesser lassen sich die Anteile des Schmierstoffs, die auf die Schmierung der Passverzahnung und der weiteren Komponente entfallen, gezielt festlegen.

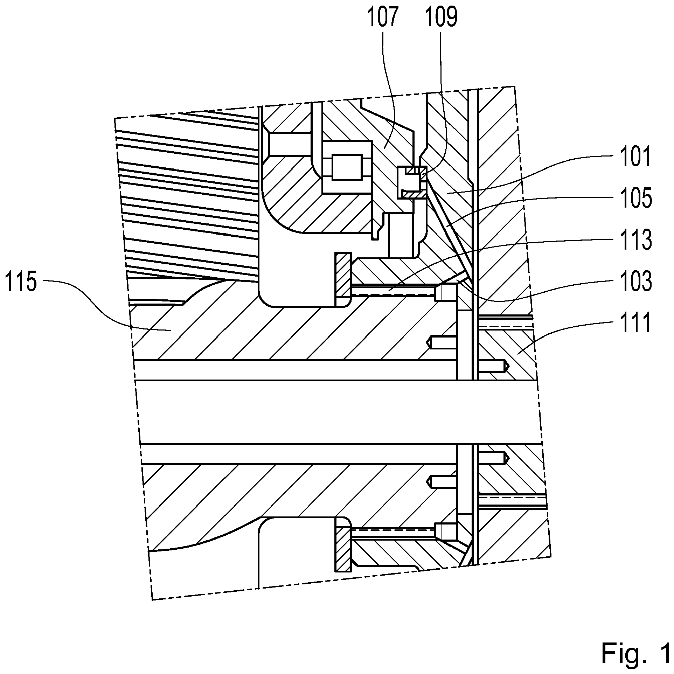

Ein bevorzugtes Ausführungsbeispiel der Erfindung ist in Fig. 1 dargestellt. Im Einzelnen zeigt:
Fig. 1 einen Ausschnitt einer Schnittdarstellung eines Planetenträgers.

Der in Fig. 1 dargestellte Planetenträger 101 weist eine erste Bohrung 103 und eine zweite Bohrung 105 auf. Schmierstoff, der über ein Getriebegehäuse 107 zugeleitet wird, gelangt über einen Transferring 109 in die zweite Bohrung.

Die zweite Bohrung 105 ist so angeordnet, dass ein Teil des Schmierstoffs aus einer Austrittsmündung der zweiten Bohrung 105 heraus auf ein Sonnenrad 111 spritzt.

Das Sonnenrad 111 gehört der gleichen Planetenstufe an wie der Planetenträger 101.

Die erste Bohrung 103 zweigt von der zweiten Bohrung 105 ab. Ein weiterer Teil des Schmierstoffs fließt dadurch über die zweite Bohrung 103 in eine Passverzahnung 113, die durch eine Sonnenwelle 115 einer vorgeschalteten Planetenstufe und den Planetenträger 101 gebildet wird.

### Bezugszeichen

- 101: Planetenträger
- 103: erste Bohrung
- 105: zweite Bohrung
- 107: Getriebegehäuse
- 109: Transferring
- 111: Sonnenrad
- 113: Passverzahnung
- 115: Sonnenwelle

## Patentansprüche

1. Getriebe mit einer Planetenstufe; wobei
ein Planetenträger (101) der Planetenstufe eine erste Verzahnung und mindestens eine Schmierstoffleitung (103, 105) mit einer ersten Austrittsmündung aufweist; wobei
die erste Verzahnung mit einer von einer weiteren Komponente des Getriebes ausgebildeten zweiten Verzahnung eine Passverzahnung (113) bildet; wobei die erste Austrittsmündung zur Schmierung der Passverzahnung (113) ausgebildet ist; wobei
die Schmierstoffleitung (103, 105) eine zweite Austrittsmündung aufweist; wobei wobei
die Schmierstoffleitung (103, 105) eine erste Bohrung (103) und eine zweite Bohrung (105) umfasst; wobei
die erste Bohrung (103) die erste Austrittsmündung ausbildet und in die zweite Bohrung (105) mündet; und wobei
die zweite Bohrung (105) eine Eintrittsmündung der Schmierstoffleitung (103, 105) und die zweite Austrittsmündung ausbildet; **dadurch gekennzeichnet, dass** die zweite Austrittsmündung zur Schmierung eines Sonnenrads (111) der Planetenstufe ausgebildet ist.

2. Getriebe nach Anspruch 1; **dadurch gekennzeichnet, dass** die zweite Austrittsmündung als Spritzdüse ausgestaltet ist.

3. Getriebe nach einem der vorhergehenden Ansprüche; **gekennzeichnet durch** eine schmierstoff- und druckleitende Verbindung zwischen der ersten Austrittsmündung und der Passverzahnung (113).

4. Getriebe nach einem der vorhergehenden Ansprüche; **dadurch gekennzeichnet, dass**
ein Durchmesser der ersten Bohrung (103) und ein Durchmesser der zweiten Bohrung (105) sich unterscheiden.

## Claims

1. Transmission with a planetary stage; wherein
a planet carrier (101) of the planetary stage has a first toothing and at least one lubricant line (103, 105) with a first outlet opening; wherein
the first toothing forms with a second toothing formed by a further component of the transmission a spline toothing (113); wherein
the first outlet opening is configured for lubrication of the spline toothing (113); wherein
the lubricant line (103, 105) has a second outlet opening; wherein
the lubricant line (103, 105) comprises a first bore (103) and a second bore (105); wherein
the first bore (103) forms the first outlet opening and opens into the second bore (105); and wherein
the second bore (105) forms an inlet opening of the lubricant line (103, 105) and the second outlet opening; **characterized in that**
the second outlet opening is configured for lubrication of a sun gear (111) of the planetary stage.

2. Transmission according to Claim 1; **characterized in that**
the second outlet opening is in the form of a spray nozzle.

3. Transmission according to either of the preceding claims; **characterized by**
a lubricant- and pressure-conducting connection between the first outlet opening and the spline connection (113).

4. Transmission according to one of the preceding claims; **characterized in that**
a diameter of the first bore (103) and a diameter of the second bore (105) are different.

## Revendications

1. Transmission comprenant un étage planétaire ;
un porte-satellites (101) de l'étage planétaire comportant une première denture et au moins une conduite de lubrifiant (103, 105) pourvue d'une première ouverture de sortie ;
la première denture formant une cannelure (113) avec une deuxième denture formée par un autre composant de la transmission ;
la première ouverture de sortie étant conçue pour lubrifier la cannelure (113) ;
la conduite de lubrifiant (103, 105) comportant une deuxième ouverture de sortie ;
la conduite de lubrifiant (103, 105) comprenant un premier alésage (103) et un deuxième alésage (105) ;
le premier alésage (103) formant la première ouverture de sortie et débouchant dans le deuxième alésage (105) ; et
le deuxième alésage (105) formant une ouverture d'entrée de la conduite de lubrifiant (103, 105) et la deuxième ouverture de sortie ; **caractérisée en ce que** la deuxième ouverture de sortie est conçue pour lubrifier une roue solaire (111) de l'étage planétaire.

2. Transmission selon la revendication 1 ; **caractérisée en ce que** la deuxième ouverture de sortie est réalisée sous la forme d'une buse de pulvérisation.

3. Transmission selon l'une des revendications précédentes ; **caractérisée par** une liaison de lubrification et de conduction de pression entre la première ouverture de sortie et la cannelure (113).

4. Transmission selon l'une des revendications précédentes; **caractérisée en ce que**
le diamètre du premier alésage (103) et le diamètre du deuxième alésage (105) sont différents.
